Europäisches Patentamt

European Patent Office

Office européen des brevets

(19)

(11) Publication number: **0 460 346 A2**

(12) **EUROPEAN PATENT APPLICATION**

(21) Application number: 91100475.2

(22) Date of filing: 16.01.91

(51) Int. Cl.5: **G11B 7/26, G11B 7/24**

(30) Priority: 04.06.90 JP 145917/90

(43) Date of publication of application:
11.12.91 Bulletin 91/50

(84) Designated Contracting States:
**DE FR GB**

(71) Applicant: **PIONEER ELECTRONIC CORPORATION**
**No. 4-1, Meguro 1-chome**
**Meguro-ku Tokyo 153(JP)**

(72) Inventor: **Takei, Kiyoshi, c/o Pioneer Elec. Corp.**
**6-6-1, Fujimi, Tsurugashima-machi**
**Iruma-gun, Saitama 350-02(JP)**
Inventor: **Chikuma, Kiyofumi, c/o Pioneer Elec. Corp.**
**6-6-1, Fujimi, Tsurugashima-machi**
**Iruma-gun, Saitama 350-02(JP)**

(74) Representative: **Finsterwald, Manfred, Dipl.-Ing., Dipl.-Wirtsch.-Ing. et al**
**Manitz, Finsterwald, Rotermund & Heyn,**
**Robert-Koch-Strasse 1**
**W-8000 München 22(DE)**

(54) Method of manufacturing optical disk.

(57) A method of manufacturing an optical disk on which light-emitting regions for absorbing a laser beam and emitting light of a wavelength different from that of the laser beam and reflection regions for reflecting a laser beam irradiated thereon are alternately arranged. A plurality of recesses corresponding to information to be recorded are formed on a transparent substrate, a light-emitting member is filled in the recesses, and a reflection layer is formed on the light-emitting regions in the pits and those portions around the regions on the substrate, thereby a high-density optical disk can be manufactured.

Fig. 1

## Field of the Invention

The present invention relates to a method of manufacturing an optical disk.

## Description of the Related Art

On an optical information recording medium, e.g., an optical disk, such as a compact disk (CD) or a video disk, information is recorded as the presence/absence (arrangement) of minute pits on tracks. In reproducing the information, an optical pickup, which traces on the tracks, detects a change in reflection light of a laser beam emitted on the pits as an electric signal.

Such optical disk have been manufactured as follows. First, a photoresist is coated on a glass master disk, and minute laser beam spots are then emitted on the master disk to deform those beam-hit regions of the photoresist by means of a cutting machine. The optically deformed regions are discretely formed in accordance with information signals. After the master disk has undergone a developing process, only the optically deformed regions are removed from the top of the master disk, leaving minute pits formed thereon. This master disk is subjected to nickel plating, then to electroforming to grow the nickel metal layer, thus forming a stamper. Using the stamper, information pits are transferred onto a transparent resin by an injection device, yielding a substrate. Metal, such as aluminum, is vapor-deposited on the substrate to form a reflection layer, and the resultant structure becomes an optical disk, such as CD. According to the conventional information recording/reproducing system using such optical disks, the resolution of detectable information (sizes of pits or regions) is limited by the maximum spatial frequency of $2NA/\lambda$ in light of the frequency characteristic, where NA is the number of apertures of the lens of the reproducing optical system and $\lambda$ is the wavelength of light used to detect recorded information. Since the practical, maximum spatial frequency of reproducible recorded information is approximately 1.0 to 1.5 times $NA/\lambda$, the high density of an optical disk is also limited.

Although various types of high-density optical disks have been developed, practical methods of manufacturing such high-density optical disks have not yet sufficiently been developed.

## SUMMARY OF THE INVENTION

It is therefore an object of the present invention to provide a simple method of manufacturing an optical disk which can ensure information recording/reproduction at high density.

According to one aspect of the present invention, there is provided a method of manufacturing an optical disk on which light-emitting regions for absorbing a laser beam and emitting light of a wavelength different from that of the laser beam and reflection regions for reflecting a laser beam irradiated thereon are alternately arranged, the method comprising the steps of:

forming a transparent substrate having a plurality of recesses arranged on a main surface thereof;

filling a light-emitting member in the recesses; and

forming a reflection layer contacting the light-emitting member in the recesses and the main surface of the substrate.

According to a second aspect of the present invention, there is provided an optical information recording disk comprising;

a transparent substrate having a track of a plurality of minute recesses arranged on a main surface thereof;

light-emitting regions which formed from said recesses being filled with light-emitting members, said light-emitting member absorbing a laser beam and emitting a light of a wavelength different from that of the irradiated laser beam; and

a reflection layer formed on said main surface carrying said light-emitting regions.

## BRIEF DESCRIPTION OF THE DRAWINGS

Fig. 1 is a cross section of one embodiment of an optical disk according to the present invention; and

Fig. 2 presents cross sections of individual elements of an optical disk in individual steps illustrating one embodiment of an optical disk manufacturing method according to the present invention.

## DETAILED DESCRIPTION OF THE PREFERRED EMBODIMENT

A preferred embodiment of the present invention will now be described referring to the accompanying drawings.

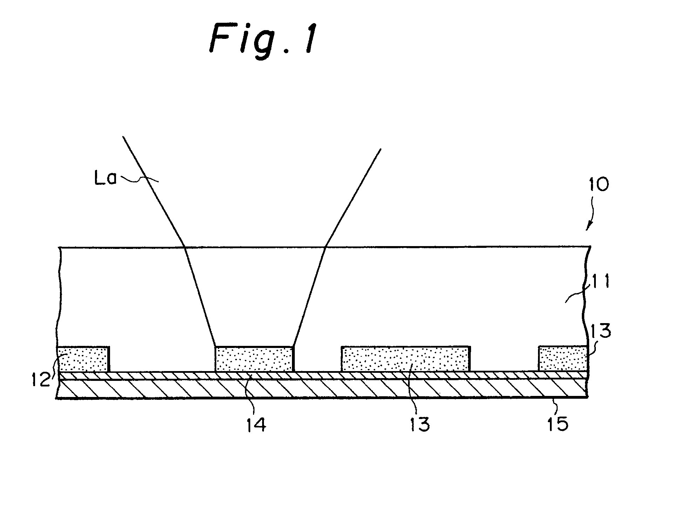

Fig. 1 presents a cross section illustrating one embodiment of an optical information recording medium according to the present invention. Referring to this diagram, a transparent substrate 11 is made of a transparent resin, such as acrylic resin or polycarbonate, or glass, and has tracks of minute recesses 12 formed on one main surface in spiral form or concentrically, for example. The recesses 12 on the substrate 11 are filled with a light-emitting member, which is sensitive to light irradiated from the other main surface side of the substrate 11 to emit light of a wavelength different from that of the irradiated light, forming island-shaped light-emitting regions 13. The light-emitting member may be a photoluminescent material, fluorescent chromatophore or fluorescent member. Outside the light-emitting regions 13 is provided a reflection layer 14 which reflects light irradiated from the other main surface side of the substrate 11 and light emitted from the light-emitting regions 13. A protective layer 15 is formed on the reflection layer 14. A laser beam La is irradiated from the side of the substrate 11. The substrate 11 of a recording medium 10 with the above structure is a copy made from, for example, a stamper prepared in the mastering step for a conventional optical disk, so that the recesses 12 correspond to the pits on the conventional optical disk. In other words, information is recorded as the arrangement of island-shaped light-emitting regions 13 formed in the recesses 12.

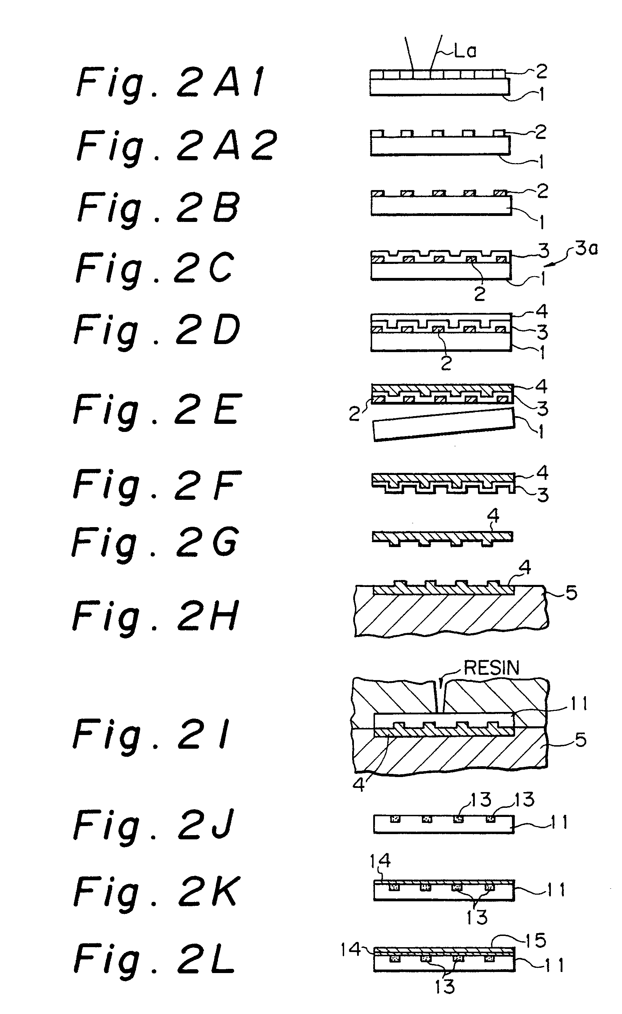

The above optical disk 10 is manufactured through the following steps. First, a photoresist master disk having a photoresist layer 2 formed uniformly on the main surface of the glass disk 1, as shown in Fig. 2A1, is prepared and a latent image in tracks of spots corresponding to given information are formed in spiral form or concentrically on the photoresist layer 2 using the laser beam La in a laser cutting step.

Then, in a developing step, the exposed photoresist master disk is set in a developing device and developed to provide tracks of minute upheavals (hereinafter referred to as pits) corresponding to signals to be recorded, on the photoresist master disk. This yields a developing master disk comprising the glass disk 1 and the pits-formed photoresist layer 2 as an information recording layer, as shown in Fig. 2A2.

In the next post-baking step, the photoresist layer 2 of the developing master disk is dried to be fixed on the glass disk 1, providing a dry master disk as shown in Fig. 2B.

In the subsequent silver sputtering step, silver is sputtered on the photoresist layer 2 to form a silver conductive film 3 thereon, yielding a mastering master disk 3a having a layer-lamination structure, as shown in Fig. 2C. The information recorded surface having pits formed thereon is rendered conductive by sputtering metal on the pits-formed photoresist layer in the above manner. In a nickel electroforming step, the acquired mastering master disk is placed in a nickel electroforming tank to plate nickel (Ni) on the silver conductive film 3 to form a thick nickel layer 4 or nickel stamper, yielding a laminated structure of the nickel stamper and the glass disk, as shown in Fig. 2D.

In the next stamper separation step, the nickel layer 4 or stamper is separated from the glass disk 1, as shown in Fig. 2E.

Then, the photoresist layer 2 remaining on the nickel layer 4 is removed in a photoresist removing step, yielding the structure shown in Fig. 2F. An alkali solution or an organic solvent available on the market is used in the photoresist separation.

In the next silver removing step, the silver conductive film 3 is removed from the nickel layer 4, and the peripheral portion of the resultant nickel layer 4 is subjected to trimming or the like, providing the nickel stamper as shown in Fig. 2G.

Before an injection molding step as a replica making step is executed, the nickel stamper is attached to a predetermined location of an injection molding machine 5, as shown in Fig. 2H. After closing the nickel stamper as shown in Fig. 2I, the injection molding machine 5 is activated to inject a transparent resin material, such as melted PMMA (polymethyl methacrylate) or PC (polycarbonate) on the nickel stamper, and the resultant structure is taken out after the resin material has been cured. This structure is the substrate 11 of an optical disk, which has a predetermined information recorded surface with pits as shown in Fig. 2J.

The pits of the substrate 11 are formed deeper than those made by the prior art, and a liquid light-emitting material 13 including a phosphor, fluorescent member or the like is coated on the pits-formed surface (see Fig. 2J) by a spin coating method so that the material 13 is filled in the pits. As a result, the island-shaped light-emitting regions 13 serving as a light-emitting layer are formed in the pits on the substrate 11. By properly setting the conditions for the spin coating method, it is possible to fill the liquid light-emitting material only in the pits and prevent this material from remaining on that portion where no pits are formed.

After the pits are filled with the light-emitting material in this manner, the reflection layer 14 which contacts the light-emitting members 13 in the pits and the main surface of the substrate 11 are formed (see Fig. 2K), then the protective layer 15 is formed on the resultant structure (see Fig. 2L) by a well-known method, completing an optical disk.

As the pits are filled with the light-emitting material in the above manner, the spatial frequency up to $2NA(1/\lambda 1 + 1/\lambda 2)$ can be picked up using a special pickup in the apparatus as disclosed in Published Unexamined Japanese Patent No. Hei 2-50328 applied by the present applicant, where NA is the number of apertures of the objective lens for reading information, $\lambda 1$ is the wavelength of light to be irradiated, and $\lambda 2$ is the wavelength of light to be emitted from the light-emitting material in response to the irradiated light. Accordingly, the optical disk having the above structure can record information of a spatial frequency up to approximately twice the amount possible in the prior art, thus ensuring high-density recording on an optical disk.

As described above, according to the present invention, a method of manufacturing an optical disk on which light-emitting regions for absorbing a laser beam and emitting light of a wavelength different from that of the laser beam and reflection regions for reflecting a laser beam irradiated thereon are alternately arranged, comprises the steps of forming a transparent substrate having a plurality of recesses arranged on a main surface thereof, filling a light-emitting member consisting of a fluorescent member in the recesses, and forming a reflection layer contacting the light-emitting member in the recesses and the main surface of the substrate. It is therefore possible to manufacture optical disks which can ensure recording/reproduction of information at high density.

## Claims

1. A method of manufacturing an optical disk on which light-emitting regions for absorbing a laser beam and emitting light of a wavelength different from that of the laser beam and reflection regions for reflecting a laser beam irradiated thereon are alternatively arranged, the method comprising the steps of:

   forming a transparent substrate having a plurality of recesses arranged on a main surface thereof;

   filling a light-emitting member in the recesses; and

   forming a reflection layer contacting the light-emitting member in the recesses and the main surface of the substrate.

2. A method of manufacturing an optical information recording medium according to claim 2, further comprising a step of forming a protective layer on said reflection layer.

3. An optical information recording disk comprising;

   a transparent substrate having a track of a plurality of minute recesses arranged on a main surface thereof;

   light-emitting regions which formed from said recesses being filled with light-emitting members, said light-emitting member absorbing a laser beam and emitting a light of a wavelength different from that of the irradiated laser beam; and

   a reflection layer formed on said main surface carrying said light-emitting regions.

4. An optical information recording disk according to claim 3, wherein said light-emitting member is a photoluminescent material, fluorescent chromatophore or fluorescent member.

5. An optical information recording disk according to claim 3, wherein said substrate is formed of transparent resin such as an acrylic resin or polycarbonate, or glass.

6. An optical information recording disk according to claim 3, further comprising a protective layer formed on said light-emitting layer.

# Fig.1

La

10

11

13

12

14

13

15

Fig. 2A1

Fig. 2A2

Fig. 2B

Fig. 2C

Fig. 2D

Fig. 2E

Fig. 2F

Fig. 2G

Fig. 2H

Fig. 2I

Fig. 2J

Fig. 2K

Fig. 2L